**Europäisches Patentamt**

(19) **European Patent Office**

**Office européen des brevets**

(11) Publication number: **0 041 787**

**A1**

(12) # EUROPEAN PATENT APPLICATION

(21) Application number: **81302274.6**

(22) Date of filing: **22.05.81**

(51) Int. Cl.³: **A 01 N 43/78**
//(A01N43/78, 37/40)

(30) Priority: **05.06.80 GB 8018436**

(43) Date of publication of application:
**16.12.81 Bulletin 81/50**

(84) Designated Contracting States:
**AT BE CH DE FR GB IT LI LU NL SE**

(71) Applicant: **FBC LIMITED**
**Hauxton**
**Cambridge CB2 5HU(GB)**

(72) Inventor: **Mayes, Anthony Joseph**
**9b Littlegreen Road**
**Woodthorpe Nottingham(GB)**

(74) Representative: **Waldman, Ralph David et al,**
**Industrial Property Department FBC Limited**
**Chesterford Park Research Station**
**Saffron Walden, Essex CB10 1XL(GB)**

(54) **Herbicidal mixtures.**

(57) A herbicidal composition useful in controlling weeds comprising benazolin and a 3,5-dibromo or a 3,5-diiodo-4-hydroxybenzonitrile or a suitable salt or ester derivative of these ingredients.

EP 0 041 787 A1

- 1 -

FBC Limited
Herbicidal Mixtures

This invention relates to herbicidal compositions and to a method of selectively controlling weeds in crops.

Benazolin is the common name for a herbicide having the chemical name 4-chloro-2-oxobenzothiazolin-3-ylacetic acid. In this specification this name is used to mean benazolin as the free acid or one of its salt e.g. potassium salt or ester e.g. ethyl ester derivatives acceptable in herbicidal applications.

It has now been found according to the invention, that under certain circumstances synergism is exhibited when benazolin is mixed with a 3,5-dihalo——4-hydroxybenzonitrile.

The invention comprises a herbicidal composition comprising benazolin in admixture with a 3,5-dihalo-4-hydroxybenzonitrile.

In this specification the term 3,5-dihalo-4-hydroxybenzonitrile means 3,5-dibromo or 3,5-diiodo-4-hydroxybenzonitrile, salts or ester derivatives acceptable in herbicidal applications, particularly the sodium or potassium salts or the n-octanoate ester. The free phenols are known by the common names bromoxynil and ioxynil respectively.

The invention is generally applicable in controlling weeds in the presence of growing crops such as cereals e.g. wheat and barley. Examples of weeds that may be controlled include mayweeds such as Matricara recu tita, chickweed (Stellaria media), knotgrass (Polygonum aviculare) and speedwells (Veronica spp.)

The weight ratio of benazolin to the 3,5-dihalo-4-hydroxybenzonitrile in the mixture of the invention is preferably within the range of from 10:1 to 1:15, more preferably 5:1 to 1:12. As examples of the quantities that are most suitable, the rate of application of benazolin can be from 25 to 500 e.g. 25-250 g./hectare.

The rate of application of the 3,5-dihalo-4-hydroxybenzonitrile is preferably from 50-1000, e.g. 100-350 g./hectare.

If desired the compositions may include other suitable herbicides e.g. to broaden the spectrum, and especially phenoxyalkanoic acid herbicides and preferably phenoxypropionic acids such as dichlorprop or mecoprop. Such ingredients may be present as the free acid or a suitable salt or ester derivative and are preferably used at a rate of application of 0.5 to 2, e.g. 1-1.5, kg./hectare.

In this specification ratios and quantities of active ingredients are based on the weight of the free acid, in the case of acids or derivatives thereof or the free phenols in the case of the 3,5-dihalo-4-hydroxybenzonitriles.

The mixture of active herbicides can be applied by, for example a spray treatment in any form known in the art for the formulation of herbicidal compounds and preferably as a dispersion, an aqueous emulsion or an aqueous concentrate.

As a dispersion, the mixture comprises the active components dispersed in a liquid medium, preferably water. The primary composition for a dispersion can be provided in a number of forms. For example it can be a dispersible solution which comprises the active components dissolved in a water-miscible solvent with the addition of a dispersing agent or it can be a dispersible powder comprising the active components and a dispersing agent. A further alternative comprises the active components in the form of a finely ground powder in association with a dispersing agent and intimately mixed with water to give a paste or cream which can if desired be added to an emulsion of oil in water to give a dispersion of active components in an aqueous oil emulsion.

An emulsion comprises the active components dissolved in a water-immiscible solvent which is formed into an emulsion with water in the presence of an emulsifying agent. An emulsion of the desired concentration can be formed from a primary composition of the following types: a concentrated stock-emulsion comprising the active components in combination with an emulsifying agent, water and water-immiscible solvent, or an emulsifiable concentrate comprising a solution of the active components in a water-immiscible solvent containing an emulsifying agent.

The preferred formulation is an aqueous concentrate of the components in a water soluble form dissolved in water and also containing a surfactant.

The above herbicidal formulations are to be regarded as part of the invention. The total concentration of the active components in a composition for direct application to the crop by conventional ground methods is preferably within the range of 0.02 to 10 per cent by weight, especially 0.05 to 1 per cent by weight, of the composition, but more concentrated compositions containing, for example up to 20 per cent may be desirable.

In a primary composition the total amount of active compound can vary widely, for example, from 5 to 95 per cent by weight.

The invention is illustrated in the following Example

Example

A field of barley infested with various weeds was divided into replicate areas and sprayed at various application rates with aqueous emulsions or solutions of active ingredients alone and in admixture. The herbicidal effects three weeks after spraying was assessed visually using a scoring system from 0 to 10 in which 0 is no control and 10 is complete control. With certain weeds and mixtures, synergism was exhibited as shown in the following tables (scores are the average of two replicates unless marked with an asterisk in which case only one plot was treated with that particular dose). The weight of active ingredient is based on the weight of free acid in the case of benazolin or free phenol in the cases of the 3,5-dihalo-4-hydroxybenzonitrile.

## Speedwell (Veronica spp.)

| Benazolin-Ethyl Ester g/ha | Control | Ioxynil-octanoate ester g/ha | Control | Mixture-Control Expected | Observed |
|---|---|---|---|---|---|
| 75 | 0 | 100 | 3.5 | 3.5 | 8 |
|  |  | 50 | 1.5 | 1.5 | 4.5 |
| 150 | 0 | 100 | 3.5 | 3.5 | 9.5 |
|  |  | 50 | 1.5 | 1.5 | 4.5 |

| Benazolin-K salt g./ha | Control | Bromoxynil-K salt g./ha | Control | Mixture-Control Expected | Observed |
|---|---|---|---|---|---|
| 75 | 0 | 300 | 3 | 3 | 6 |
|  |  | 150 | 1.5 | 1.5 | 3 |

## Mayweed (Matricaria recutita)

| Benazolin-K salt g/ha | Control | Bromoxynil-K salt g/ha | Control | Mixture-Control Expected | Observed |
|---|---|---|---|---|---|
| 75 | 0.5 | 75 | 2 | 2.5 | 6.75 |
|  |  | 37.5 | 0.5 | 1.0 | 5 |

In a similar manner experiments were carried out with fields of wheat. The degree of weed control was assessed as previously; two weeks after spraying synergism was exhibited in the following instances.

## Chickweed (Stellaria Media)

| Benazolin-ethyl ester g/ha | Control | Ioxynil-octanoate ester g/ha | Control | Mixture-Control Expected | Observed |
|---|---|---|---|---|---|
| 37.5 | 0 | 400 | 4 | 4 | 8.5 |
|  |  | 200 | 0.5 | 0.5 | 7* |
|  |  | 100 | 1 | 1 | 4 |
|  |  | 50 | 0.5 | 0.5 | 2* |
| 75 | 0 | 400 | 4 | 4 | 8 |
|  |  | 200 | 0.5 | 0.5 | 6 |

| | | | | | |
|---|---|---|---|---|---|
| 100 | | 1. | 1 | 4* | |
| 50 | | 0.5 | 0.5 | 3.5 | |

| Benazolin-ethyl ester | | Bromoxynil-octanoate ester | | Mixture-Control | |
|---|---|---|---|---|---|
| g/ha | Control | g/ha | Control | Expected | Observed |
| 37.5 | 0 | 300 | 0 | 0 | 5.5 |
| | | 150 | 0 | 0 | .4 |
| 150 | 1* | ·300 | 0 | 1 | 6.5 |
| | | 150 | 0 | 1 | 4 |

In the same trial 2½ months after spraying synergism was demonstrated as follows against knotgrass.

| Benazolin-ethyl ester | | Ioxynil-octanoate ester | | Mixture - Control | |
|---|---|---|---|---|---|
| g/ha | Control | g/ha | Control | Expected | Observed |
| 75 | 0 | 400 | 6* | 6 | 9.5 |
| | | 200 | 5* | 5 | 8.5 |
| | | 100 | 0* | 0 | 5 |
| | | 50 | 0* | 0 | 5 |
| 150 | 0 | 400 | 6* | 6 | 10 |
| | | 200 | 5* | 5 | 10 |
| | | 100 | 0* | 0 | 9.5 |
| | | 50 | 0* | 0 | 6 |

## Claims

1. A herbicidal composition comprising benazolin and a 3.5-dihalo-4-hydroxybenzonitrile.

2. A composition according to claim 1 in which the ratio of benazolin to 3.5-dihalo-4-hydroxybenzonitrile is from 10:1 to 1:15 based on the weight of components expressed as the free acid.

3. A composition according to claim 2 in which the ratio is from 5:1 to 1:12.

4. A composition according to any one of claims 1 to 3 in which the ingredients are in the form of an agronomically acceptable ester.

5. A method for the control of weeks after their emergence which comprises applying to the crop area a mixture comprising benazolin and a 3.5-dihalo-4-hydroxy benzonitrile.

6. A method according to claim 5 in which the ratio of benazolin to 3.5-dihalo-4-hydroxybenzonitrile is from 10:1 to 1:15 based on the weight of components expressed as the free acid.

7. A method according to claim 6 in which the ratio is from 5:1 to 1:12.

8. A method according to any one of claims 5 to 7 in which the ingredients are in the form of an agronomically acceptable ester.

| European Patent Office | EUROPEAN SEARCH REPORT | EP 81 30 2274 Application number |
|---|---|---|

## DOCUMENTS CONSIDERED TO BE RELEVANT

| Category | Citation of document with indication, where appropriate, of relevant passages | Relevant to claim |
|---|---|---|
| | CHEMICAL ABSTRACTS, vol. 88, no. 9, February 27, 1978, page 123, abstract 59293t and Chemical Substance Index January-June 1978, page 909CS Columbus, Ohio, USA A. AAMISEPP "Weed control in leys for forage" | 1-8 |
| | & SWED. WEED CONF., (Proc.) 1977, 18 (Weeds Weed Control), F 22 - F 25 | |
| | * 3(2H)-Benzothiazoleacetic acid, 6-chloro-$\alpha$-methyl-2-axo-mixt. with 3,5-dibromo-4-hydroxybenzonitrile and sodium (4-chloro-2-mehtyl-phenoxy) acetate * | |
| | -- | |
| | BE - A - 730 998 (C.H. BOEHRINGER) | 1-8 |
| | * Claims * | |
| | -- | |
| A | FR - A - 1 442 294 (AMCHEM) | |
| | & GB 1 106 123 | |
| A | US - A - 3 592 626 (B.J.HEYWOOD et al.) | |
| | ----- | |

**CLASSIFICATION OF THE APPLICATION (Int. Cl.³)**

A 01 N 43/78 //
(A 01 N 43/78
37/40)

**TECHNICAL FIELDS SEARCHED (Int. Cl.³)**

A 01 N 43/78
37/40

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| | | | |
|---|---|---|---|
| The present search report has been drawn up for all claims | | | |
| Place of search The Hague | Date of completion of the search 22-09-1981 | Examiner DECORTE | |

EPO Form 1503.1 06.78